# EUROPEAN PATENT SPECIFICATION

(11) **EP 3 642 283 B1**
(45) Date of publication and mention of the grant of the patent: **28.04.2021**
(21) Application number: 18729985.4
(22) Date of filing: 13.06.2018
(51) Int. Cl.: C08L 71/00, C08J 7/04, B32B 15/08, H01B 3/30, H01B 3/40, H01B 3/42

(54) **LAYERED STRUCTURES**
SCHICHTSTRUKTUREN
STRUCTURE EN COUCHES

(30) Priority: 20.06.2017 US 201762522430 P; 25.07.2017 US 201762536613 P; 21.09.2017 EP 17192343
(43) Date of publication of application: 29.04.2020
(73) Proprietor: Solvay Specialty Polymers USA, LLC, Alpharetta, Georgia 30005-3914 (US)
(72) Inventor: SATO, Yasunobu, Tokyo 157-0066 (JP); HAMMONDS, Ryan, Atlanta, GA 30360 (US)
(74) Representative: Fiorucci, Hélène
(86) International application number: PCT/EP2018/065654
(87) International publication number: WO 2018/234116

(56) References cited:
- WO-A1-2014/072447
- WO-A1-2016/102330
- GB-A- 1 141 030
- JP-A- S63 304 068

## Description

### CROSS-REFERENCE TO RELATED APPLICATIONS

This application claims priority to U.S. provisional application No. 62/522,430 filed June 20, 2017, U.S. provisional application No. 62/536,613 filed July 25, 2017, and European application No. EP17192343.6 filed September 21, 2017.

### FIELD OF THE INVENTION

The present invention relates to layered structures including a polymeric layer and a varnish layer in contact with the polymeric layer, wires including the layered structures, and methods of making the layered structures.

### BACKGROUND

Polyetheretherketone (PEEK) is a semi-crystalline thermoplastic that is highly resistant to thermal degradation and exhibits excellent mechanical properties and chemical resistance, even at high temperatures. Because of its advantageous properties, PEEK has been extruded as an insulation layer on conductive wires where high electrical insulation is needed, such as, for example, magnet wires used in electric motors for automotive applications.

### BRIEF DESCRIPTION OF THE FIGURES

Exemplary embodiments will be understood by reference to the following figures :
Fig. 1 is a schematic depiction of the cross-section of a layered structure according to an exemplary embodiment.
Fig. 2 is a schematic depiction of the cross-section of a layered structure including a metal substrate according to an exemplary embodiment.
Fig. 3 is a schematic depiction of the cross-section of a layered structure including a metal substrate and an intermediate layer.
Fig. 4 is a schematic depiction of a transverse cross-section of a wire with impregnated varnish layer.
Fig. 5 is a schematic depiction of a portion of a coil assembly showing the transverse cross-section of two wires with impregnated varnish layer.

The various features shown in the figures are not shown to scale relative to each other.

### DETAILED DESCRIPTION OF PREFERRED EMBODIMENTS

Described herein is a layered structure including a polymeric layer and a varnish layer in contact with the polymeric layer. Described herein are also wires including the layered structure and methods of making the layered structure.

Applicants surprisingly discovered that polymeric layers including PEEK and a poly(aryl ether sulfone) (PAES) exhibit adhesion strength with epoxy varnish of more than three times that of PEEK alone without significantly reducing the crystallization temperature of the polymeric layer.

Various applications require forming an adhesive bond between varnishes and PEEK. For example, coils of PEEK-coated wires may be potted in an epoxy-based-resin composition which impregnates and immobilizes the coils once cured. However, because of the chemical resistance of PEEK to both organic and aqueous environments, varnishes-and in particular epoxy varnishes-do not adhere well to PEEK. It has therefore been necessary to chemically or physically treat the surface of the PEEK, for example, by using an adhesive to form a suitable bond between the PEEK and the epoxy varnish. Additional steps such as applying an adhesive may result in additional costs and delays in production.

Accordingly, a need exists to increase the adhesion of PEEK with epoxy varnishes without the necessity of a separate adhesive, and without significantly diminishing the advantageous properties of PEEK, such as its chemical resistance.

As discussed above, Applicants unexpectedly found that blends of PAES and PEEK exhibit markedly increased peel strength with epoxy varnishes as compared to PEEK alone, and do so without the need for surface treatment or sacrifice of chemical resistance or mechanical properties. In particular, the increase in peel strength was surprisingly achieved without a significant reduction in the crystallization temperature, which is critical to maintaining high crystallinity and associated chemical resistance.

In some embodiments, the peel strength between the polymeric and varnish layers as evaluated in the Examples, ranges from 1.30 to 1.80 N/12.7mm, preferably from 1.40 to 1.70 N/12.7mm, most preferably from 1.41 to 1.70 N/12.7mm. Peel strength can be measured as described in the Examples below.

In some embodiments, the crystallization temperature of the polymeric layer ranges from 296 to 298 °C as measured by DSC. Most preferably, the crystallization temperature is 296 °C. The crystallization temperature can be measured as described in the Examples below.

The polymeric layer includes PEEK, a PAES, optionally a reinforcing filler, and optionally one or more additives as described below.

### Poly(ether ether ketone) (PEEK)

As used herein, a "poly(ether ether ketone) (PEEK)" denotes any polymer of which more than 50 mol % of recurring units (R_{PEEK}) are recurring units of formula : 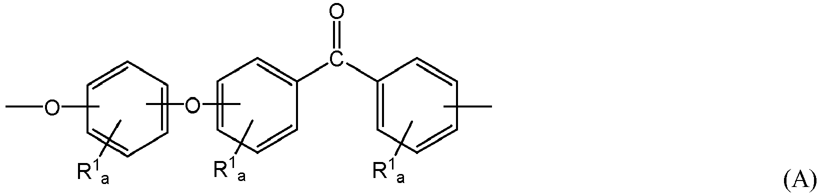 where :
each R¹, equal or different from each other, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
each a, equal to or different from each other, is independently selected from 0, 1, 2, 3, and 4. Preferably, each a is 0.

Preferably at least 60 mol %, 70 mol %, 80 mol %, 90 mol %, 95 mol %, 99 mol % of recurring units (R_{PEEK}) are recurring units of formulae (A).

Preferably, the phenylene moieties in recurring units (R_{PEEK}) have 1,3- or 1,4- linkages.

In some embodiments, the more than 50 mol % of recurring units (R_{PEEK}) are recurring units of formula : 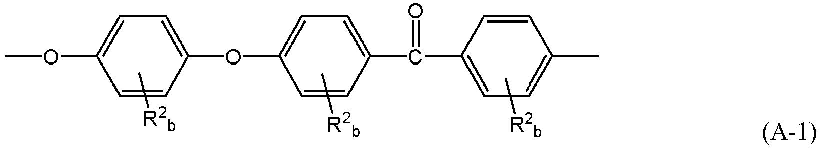 where each R² and b, at each instance, is independently selected from the groups described above for R¹ and a, respectively. Preferably each b in formulae (A-1) is zero.

Preferably at least 60 mol %, 70 mol %, 80 mol %, 90 mol %, 95 mol %, 99 mol % of recurring units (R_{PEEK}) are recurring units of formula (A-1).

### Poly(aryl ether sulfone) (PAES)

As used herein, a "poly(aryl ether sulfone) (PAES)" denotes any polymer of which at least 50 mol % of the recurring units are recurring units (R_{PAES}) of formula : 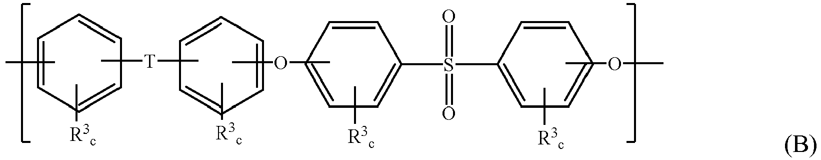 where :
each R³, equal to or different from each other, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
each c, equal to or different from each other, is independently selected from 0, 1, 2, 3, and 4, preferably 0; and
T is selected from the group consisting of a bond, a sulfone group [-S(=O)₂₋], and a group -C(R⁴)(R⁵)-, where R⁴ and R⁵, equal to or different from each other, is independently selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium. R⁴ and R⁵ are preferably methyl groups.

Preferably at least 60 mol %, 70 mol %, 80 mol %, 90 mol %, 95 mol %, 99 mol % of recurring units (R_{PAES}) are recurring units of formula (B).

In some embodiments, the PAES is a polyphenylsulfone (PPSU). As used herein, a "polyphenylsulfone (PPSU)" denotes any polymer of which more than 50 mol % of the recurring units (R_{PAES}) are recurring units of formula : 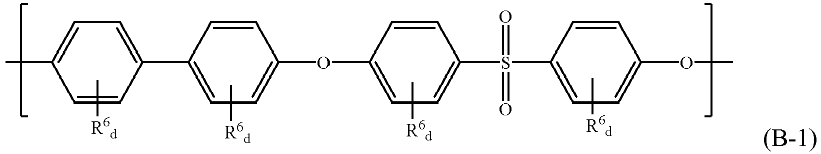 where each R⁶ and d, at each instance, is independently selected from the groups described above for R³ and c, respectively. Preferably each d in formulae (B-1) is zero.

Preferably at least 60 mol %, 70 mol %, 80 mol %, 90 mol %, 95 mol %, 99 mol % of recurring units (R_{PAES}) are recurring units of formula (B-1).

PPSU can be prepared by known methods and is available as RADEL® PPSU from Solvay Specialty Polymers USA, L.L.C.

some embodiments, the PAES is a polyethersulfone (PES). As used herein, a "polyethersulfone (PES)" denotes any polymer of which more than 50 mol % of the recurring units (R_{PAES}) are recurring units of formula : 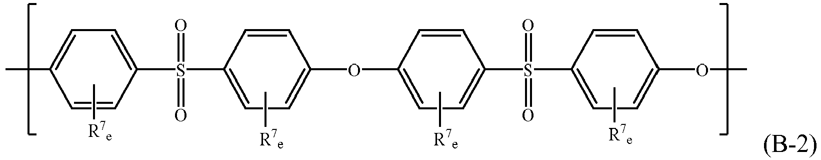 where each R⁷ and e, at each instance, is independently selected from the groups described above for R³ and c, respectively. Preferably each e in formulae (B-2) is zero.

Preferably at least 60 mol %, 70 mol %, 80 mol %, 90 mol %, 95 mol %, 99 mol % of recurring units (R_{PAES}) are recurring units of formula (B-2).

PES can be prepared by known methods and is available as VERADEL® PESU from Solvay Specialty Polymers USA, L.L.C.

The amount of PEEK in the polymer composition preferably ranges from about 50 to about 99 wt. %, preferably from about 70 to about 90 wt. %, preferably from about 80 to about 90 wt. %, based on the total weight of the PEEK and the PAES. Most preferably, the amount of PEEK in the polymer composition is about 85 wt. % based on the total weight of the PEEK and the PAES.

In some embodiments, the PAES is a polysulfone (PSU). As used herein, a "polysulfone (PSU)" denotes any polymer of which more than 50 mol % of the recurring units (R_{PAES}) are recurring units of formula : 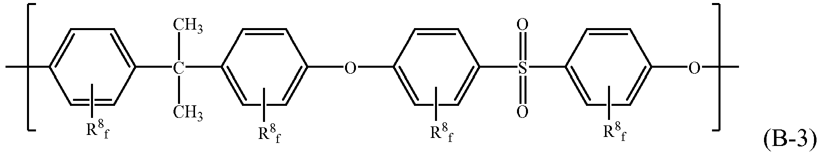 where each R⁸ and f, at each instance, is independently selected from the groups described above for R³ and c, respectively. Preferably each f in formulae (B-3) is zero.

Preferably at least 60 mol %, 70 mol %, 80 mol %, 90 mol %, 95 mol %, 99 mol % of recurring units (R_{PAES}) are recurring units of formula (B-3).

PSU can be prepared by known methods and is available as UDEL® PSU from Solvay Specialty Polymers USA, L.L.C.

Preferably the PAES is selected from the group consisting of PSU, PPSU, and a combination thereof. In some embodiments, the PAES includes PSU and PPSU. Most preferably, the PAES is PSU.

The amount of PAES in the polymer composition preferably ranges from about 1 to about 25 wt. %, preferably from about 10 to about 20 wt. %, preferably from about 12 to about 17 wt. %, based on the total weight of the PEEK and the PAES. Most preferably, the amount of PAES in the polymer composition is about 15 wt. %, based on the total weight of the PEEK and the PAES.

In some embodiments, the polymer composition includes PSU in an amount preferably ranging from about 1 to about 20 wt. %, preferably from about 10 to about 20 wt. %, preferably from about 12 to about 17 wt. %, based on the total weight of the PEEK and the PSU. Most preferably, the amount of PSU in the polymer composition is about 15 wt. %, based on the total weight of the PEEK and the PSU.

In some embodiments, the polymer composition includes PPSU in an amount preferably ranging from about 1 to about 10 wt. %, preferably about 1 to about 7 wt. %, most preferably about 2 to about 5 wt. %, based on the total weight of the PEEK, the PSU, and the PPSU.

### Optional Reinforcing Fillers

The polymeric layer may optionally include reinforcing fillers such as fibrous or particulate fillers. A fibrous reinforcing filler is a material having length, width and thickness, wherein the average length is significantly larger than both the width and thickness. Preferably, such a material has an aspect ratio, defined as the average ratio between the length and the smallest of the width and thickness of at least 5. Preferably, the aspect ratio of the reinforcing fibers is at least 10, more preferably at least 20, still more preferably at least 50. The particulate fillers have an aspect ratio of at most 5, preferably at most 2.

Preferably, the reinforcing filler is selected from mineral fillers, such as talc, mica, kaolin, calcium carbonate, calcium silicate, magnesium carbonate; glass fibers; carbon fibers, boron carbide fibers; wollastonite; silicon carbide fibers; boron fibers, graphene, carbon nanotubes (CNT), and the like. Most preferably, the reinforcing filler is glass fiber, preferably chopped glass fiber.

The amount of the reinforcing filler may range in the case of particulate fillers, from 1 wt. % to 40 wt. %, preferably from 5 wt. % to 35 wt. % and most preferably from 10 wt. % to 30 wt. %, and in the case of fibrous fillers from 5 wt. % to 50 wt. %, preferably from 10 wt. % to 40 wt. %, and most preferably from 15 wt. % to 30 wt. % based on the total weight of the polymer layer. In some embodiments, the polymer layer is free of a fibrous filler. Alternatively the polymer layer may be free of a particulate filler. Preferably, the polymer composition is free of reinforcing fillers.

### Optional Additives

In addition to the PEEK, PAES, and the optional reinforcing filler, the polymer composition may further include optional additives such as titanium dioxide, zinc sulfide, zinc oxide, ultraviolet light stabilizers, heat stabilizers, antioxidants such as organic phosphites and phosphonites, acid scavengers, processing aids, nucleating agents, lubricants, flame retardants, a smoke-suppressing agents, anti-static agents, anti-blocking agents, and conductivity additives such as carbon black.

When one or more optional additives are present, their total concentration is preferably less than 10 wt. %, more preferably less than 5 wt. %, and most preferably less than 2 wt. %, based on the total weight of polymer composition.

### Epoxy Varnish

The varnish layer of the layered structure includes copolymer including more than 50 mol % of the recurring units (R_{EPOX}) of formula :

-[-O-Y-O-Z-]- (C)

where :
Y is a C₂-C₆ alkyl group, preferably an ethyl group; and
Z is a group of formula : 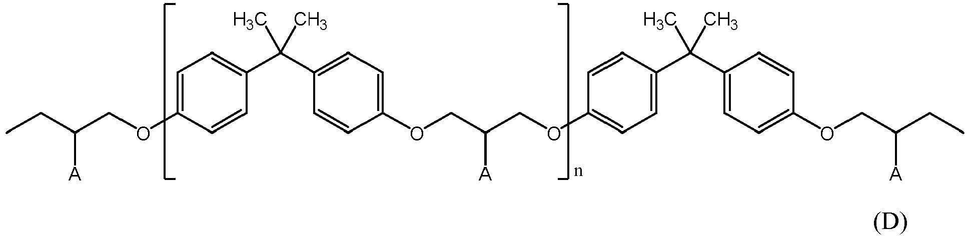
   where n is an integer ranging from 0 to 25, and
   each A is independently selected from the group consisting of a hydroxyl group (-OH) and an oxygen that is bonded to a terminal carbon of an additional Z group. In formula (D), the terminal carbons are the carbon atoms at respective ends of the backbone of the moiety. Thus, as will be understood by one of skill in the art, each A group may be a hydroxyl group or an oxygen that forms an ether crosslink to an additional Z group by reaction with a terminal expoxide group of the epoxy resin described below. Preferably, the copolymer is branched in this way and is present in the form of a three-dimensional cross-linked thermoset structure.

Preferably at least 60 mol %, 70 mol %, 80 mol %, 90 mol %, 95 mol %, 99 mol % of recurring units (R_{EPOX}) are recurring units of formula (D).

The varnish layer of the layered structure can be made from an epoxy-resin-based composition comprising an epoxy resin, a hardener, and optionally other ingredients such a solvent.

The epoxy resin is a bisphenol A epoxy resin of formula : 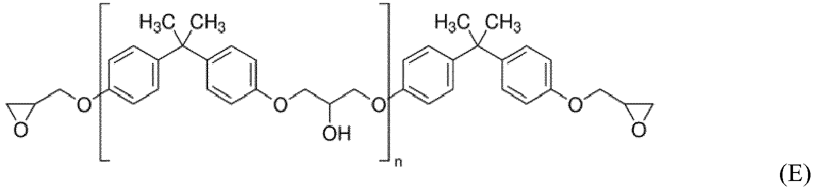 where n is an integer ranging from 0 to 25.

The number average molecular weight (Mn) of the epoxy resin preferably ranges from 348 to 4000 g/mol.

The amount of the epoxy resin preferably ranges from 30 to 60 wt. %, based on the total weight of the epoxy-based-resin composition.

The vanish composition further includes a hardener, preferably ethylene glycol. The hardener is preferably present in an amount ranging from 0.1 to 1.0 wt.%, based on the total weight of the epoxy-based-resin composition.

In some embodiments, the vanish composition includes 2-butoxyethanol. The 2-butoxyethanol is preferably present in an amount ranging from 10 to 30 wt.%, based on the total weight of the epoxy-based-resin composition.

In some embodiments, the vanish composition includes xylene. The xylene is preferably present in an amount ranging from 10 to 30 wt. %, based on the total weight of the epoxy-based-resin composition.

In some embodiments, the vanish composition includes ethybenzene. The ethylbenzene is preferably present in an amount ranging from 1 to 5 wt. %, based on the total weight of the epoxy-based-resin composition.

In some embodiments, the epoxy-based-resin composition includes the 30 to 60 wt. % of the epoxy resin, 10 to 30 wt. % of the 2-butoxyethanol, 10 to 30 wt. % of the xylene, 1 to 5 wt. % of the ethylbenzene, and 0.1 to 1.0 wt. % of ethylene glycol.

The epoxy-based-resin composition can be cured to form a varnish layer by reacting the epoxy resin with the hardener, preferably to form a three-dimensional cross-linked thermoset structure. Curing can be effected by heating the epoxy-based-resin composition at a temperature of less than 200°C, preferably less than 150°C for a time sufficient to form the varnish layer, preferably in the form of a hard coating, as will be known to those of skill in the art. Preferably, the epoxy-based-resin composition is heated at a temperature at least as high as the glass transition temperature (Tg) of the resulting varnish layer.

### Layered Structure

The layered structures include a polymeric layer and a varnish layer in contact with the polymeric layer. In some embodiments, the layered structure includes a metal substrate, as described in detail below.

In general, the polymeric layer provides a protective coating to an underlying metal substrate. For example, as described in detail below, the polymeric layer can be an electrically insulating layer for a conductive substrate (*e.g.* an electrical wire). Additionally or alternatively, the polymeric layer can protect an underlying metal substrate from physical damage. In some embodiments, the polymeric layer has an average thickness ranging from about 5 µm to about 200 µm, preferably from about 15 µm to about 180 µm, most preferably from about 40 µm to about 180 µm.

The polymeric layer is in contact with the varnish layer. As noted above, the polymeric layer including the PAES and PEEK blend had surprisingly increased adhesive strength to varnish layers, relative to corresponding polymeric layers free of the PAES. While the varnish layer can provide any suitable function (*e.g.* protection of the underlying polymeric layer), in some embodiments, the varnish layer additionally or alternatively provides a structural support matrix (*e.g.* a potting material) for the polymeric layer coated metal substrate. In one such embodiment, as described in detail below, the metal substrate can be a coiled wire, and the varnish layer can provide a structural matrix to help maintain the wire in a coiled configuration. In some embodiments, the varnish layer can have an average thickness ranging from about 25 to about 1000 microns.

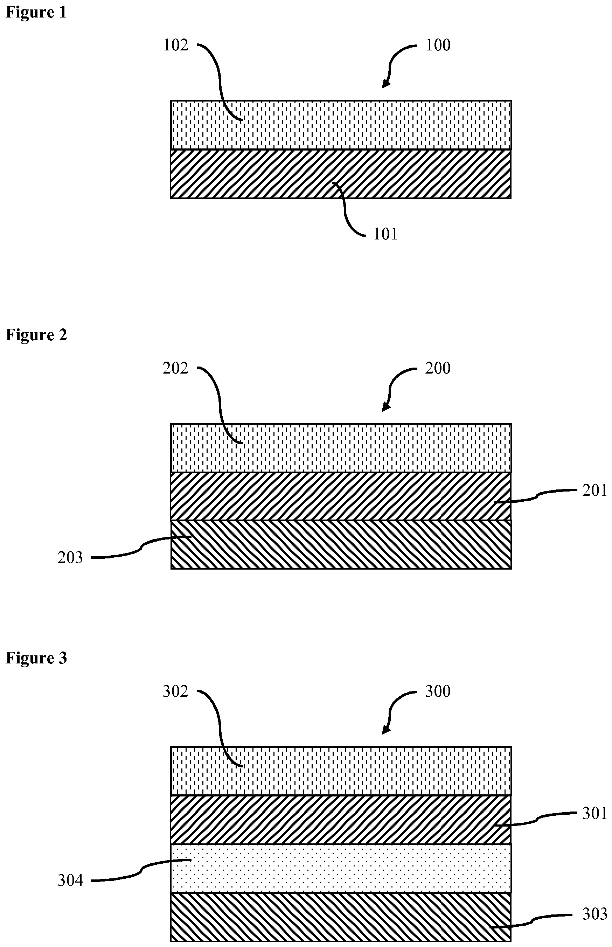

Fig. 1 is a schematic depiction of a cross-section of one embodiment of a layered structure. Layered structure 100 includes polymeric layer 101 and varnish layer 102 in contact with polymeric layer 101.

The PAES in polymeric layer 101 is preferably PSU, PPSU, or a combination thereof, most preferably PSU.

As noted above, in some embodiments, the layered structure further includes a metal substrate. In some such embodiments, the metal substrate is in contact with the polymeric layer. In alternative embodiments, an intermediate layers is disposed between the metal substrate and polymeric layer. In such embodiments, the intermediate layer is in contact with the polymeric layer and the metal substrate.

In some embodiments, the metal substrate includes copper, aluminum, or a combination thereof. Preferably, the metal substrate is copper, most preferably low oxygen copper having an oxygen content of 30 ppm or less, preferably 20, ppm or less. The person of ordinary skill in the art will recognize that metals gradually oxidize when exposed to oxygen (e.g. atmospheric oxygen). Accordingly, the surfaces of the metal substrate may contain metal oxides. For example, an aluminum metal substrate may have a surface comprising aluminum oxide, though the bulk material between the substrate surfaces is aluminum metal.

Preferably, the first layer is extrusion coated on the metal substrate.

Fig. 2 is a schematic representation of one embodiment of a layered structure having a metal substrate. Layered structure 200 includes polymeric layer 201, varnish layer 202 in contact with polymeric layer 201, and metal substrate 203 in contact with polymeric layer 201. Layered structure 200 may be the same as the layered structure 100, except that it includes metal substrate 203.

Fig. 3 is a schematic representation of one embodiment of a layer structure having a metal substrate and an intermediate layer disposed between the metal substrate and the polymeric layer. Layered structure 300 includes polymeric layer 301, varnish layer 302 in contact with polymeric layer 301, metal substrate 303, and intermediate layer 304 disposed between and in contact with polymeric layer 301 and metal substrate 303. Layered structure 300 may be the same as the layered structure 200, except that it includes intermediate layer 204.

In electronics, "potting" is a process of filling a complete electronic assembly with a solid or gelatinous compound for resistance to shock and vibration, and for exclusion of moisture and corrosive agents. A varnish layer can be used as a potting material for coils of wire. Once cured, the varnish layer holds the wire (e.g., the turns of wire in a coil) in place during use, provided that the adhesion between the wire and the varnish layer is maintained.

Applicants have surprisingly discovered that blends of a PAES, preferably PSU, or PSU and PPSU, with PEEK in the polymeric layer (i.e. the insulation layer) of a magnet wire results in markedly increased adhesion strength between the polymeric layer and a varnish layer as compared with a polymeric layer free of the PAES-and does so without significantly reducing the crystallization temperature of the polymeric layer. Indeed, in some embodiments, the crystallization temperature of the polymeric layer as measured by DSC is reduced 2°C or less as compared with the crystallization temperature of the same layer free of the PAES. Minimizing the decrease in crystallization temperature results in a more crystalline polymer composition without substantially impaired chemical resistance.

As noted above, in some embodiments, the layered structure can include a wire. In such embodiments, the metal substrate is the electrically conductive wire, and the polymeric layer is the wire insulator (*e.g.* non-conductive wire coating).

In some embodiments, the wire is a magnet wire. Magnet wire can be used, for example, in the construction of transformers, inductors, motors, speakers, hard disk head actuators, electromagnets, and other applications that require tight coils of insulated wire.

The wire may have a circular or non-circular transverse cross-section. Preferably, the cross-section is non-circular. Most preferably, the wire has a rectangular or rounded rectangular cross-section. Use of a rectangular or rounded rectangular wire is particularly advantageous when the wire is a magnet wire to be coiled because the shape of the wire allows improved packing of the wire strands for a greater number of wires per cross-sectional area. This also results in greater structural stability and thermal conductivity across adjacent turns of wire.

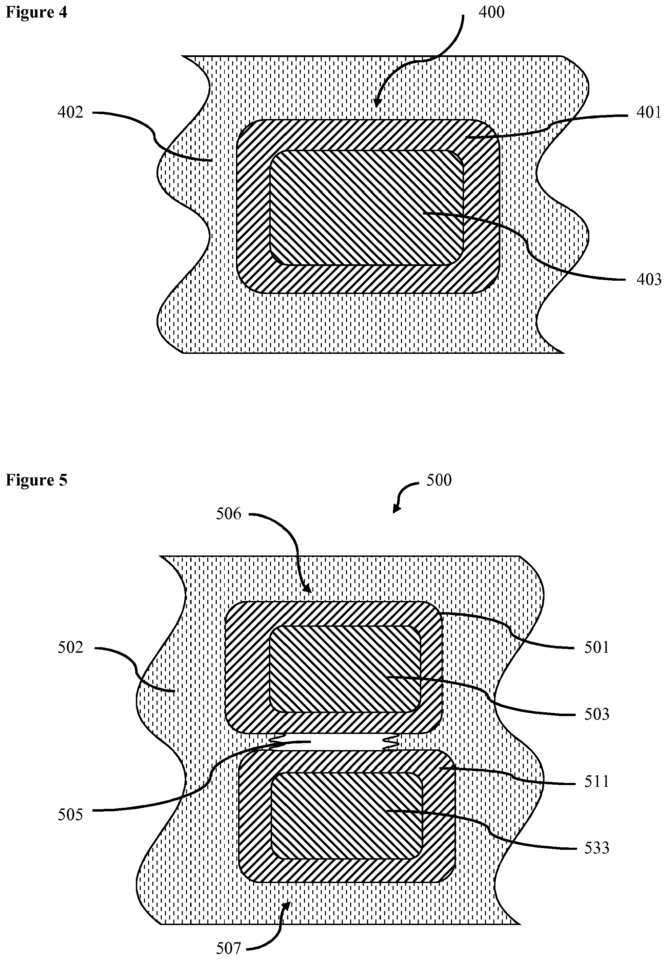

Fig. 4 is a schematic depiction of the transverse cross-section of a wire. Wire 400 includes metal substrate 403 and polymeric layer 401 surrounded by varnish layer 402. Wire 400 has a rounded rectangular shape. In the cross-section of Fig. 4, polymeric layer 401 (i.e., the electrical insulation layer) and varnish layer 402 are concentric about metal substrate 403 (i.e. the electrical conductor). As used herein, the "transverse cross-section" or "cross-section" when referencing a wire is the cross-section perpendicular to the longitudinal axis of the wire, where the longitudinal axis is the central axis parallel to the length of the wire when the wire is laid straight.

Although in the embodiment of Fig. 4, varnish layer 402 is continuous and surrounds wire 400, in alternative embodiments, and depending upon how the epoxy-resin-based composition is applied, the varnish layer may be discontinuous and may contact only a portion of the outer surface of the wire.

Fig. 5 is a schematic depiction of a portion of a coil assembly 500 with first wire 506 adjacent to second wire 507 as the wires might be arranged in a coil. Additional wires may be present but are not shown. First wire 506 and second wire 507 may be turns of the same wire. First wire 506 includes metal substrate 503 and polymeric layer 501. Similarly, second wire 507 includes metal substrate 533 and polymeric layer 511. Varnish layer 502 impregnates first wire 506 and second wire 507.

The embodiment of Fig. 5 includes void 505 that does not include varnish layer 502; however, in an alternate embodiment (not shown) the varnish layer 502 may fill void 505 and extend continuously between first wire 506 and second wire 507.

As discussed above, the varnish layer of any embodiment may be continuous or it may be discontinuous, and may contact all or only a portion of the outer surface of the wire. In some embodiments, the varnish layer surrounds the wire.

Depending on how the epoxy-resin-based composition is applied, and the arrangement of turns in a coil, the varnish layer may or may not fully impregnate the coil. Thus, turns of wire in a coil may directly contact each other, or may have a continuous or discontinuous varnish layer between them.

Accordingly, in some embodiments, the layered structures as described herein may include a varnish layer that is at least partly shared with one or more additional layered structures. In other words, the varnish layer of one layered structure may also be the varnish layer of one or more additional layered structures. For example the varnish layer may be shared between two wires or turns of the same wire and the same varnish layer may contact the polymeric layer of two, three, four, or more wires.

In some embodiments, the polymeric layer of a first wire (or turn of the same wire) may contact the polymeric layer of a second wire (or turn of the same wire) in a coil assembly such that the varnish layer is not present between the wires.

### Methods of Making the Layered Structures

Exemplary embodiments also include methods of making the layered structures described above.

In some embodiments the method includes applying the epoxy-resin-based composition to the polymeric layer, and curing the epoxy-resin-based composition to form a varnish layer at a temperature less than 200°C, preferably less than 150°C.

In some embodiments, the method includes extruding the polymeric layer on the metal substrate or intermediate layer prior to application of the epoxy-resin-based composition.

In some embodiments, the method includes extruding the polymeric layer onto the metal substrate to form a wire, applying the epoxy-resin-based composition to the polymeric layer of one or more wires, and curing the epoxy-resin-based composition to form a varnish layer.

Exemplary embodiments will now be described in the following nonlimiting examples.

### EXAMPLES

A variety of compositions were evaluated to determine their adhesion strength to epoxy varnish, crystallization temperature, and mechanical properties. Table 1 below shows the results for three Examples and four Comparative Examples.

### Materials

The following materials were used in the Examples and Comparative Examples :
KetaSpire® PEEK KT-880P available from Solvay Specialty Polymers USA, L.L.C.
Ultem® PEI 1000 natural resin available from SABIC Innovative Plastics.
Udel® PSU P-3703P NT available from Solvay Specialty Polymers USA, L.L.C.
Radel® PPSU 5600 NT available from Solvay Specialty Polymers USA, L.L.C. Calcium stearate.
Pedigree® 923-50 epoxy varnish available from ELANTAS GmbH.
Kapton® 200H polyimide film (thickness 50 µm) available from Dupont.

### Preparation of Formulations

The compositions of the Examples and Comparative Examples are shown below in Table 1. All polymer blends were prepared by first tumble blending pellets of the resins to be blended in their respective amounts for about 20 minutes, followed by melt compounding.

### Evaluation of Mechanical and Rheological Properties

Mechanical properties were tested for all the formulations using injection molded 0.125 in (3.2 mm) thick ASTM test specimens which consisted of Type I tensile bars. The following ASTM test methods were employed in evaluating the mechanical properties of the formulations :
D638 : Tensile properties
D790 : Flexural properties
D256 : Izod impact resistance (notched)
D3835 : Melt viscosity (400 °C, 1,000 1/s)
D3418 : Crystallization temperature was measured by DSC using heating and cooling rates of 20°C per minute.

### Adhesion Testing

Adhesion strength of the epoxy varnish to the PEEK formulations was evaluated using a peel strength test. In each case, a 50 µm thick polyimide film was coated with the epoxy varnish and pre-baked for 2 minutes at 160 °C. An ASTM flex bar (3.2 mm x 12.7 mm x 125 mm) was then placed on top of the polyimide film, and the combination was baked for 30 minutes at 180 °C. After cooling to room temperature (23° C), the adhered polyimide film was cut to match the dimensions of the ASTM flex bar (12.7 mm x 125 mm). Peel strength was evaluated using a Instron machine with chuck distance 100 mm, and rate of 50 mm/min In the Table, 1 ksi=6.895 MPa and 1 psi=0.006895 MPa.

**Table 1**

| **Example** | **C1** | **C2** | **C3** | **C4** | **5** | **6** | **7** |
|---|---|---|---|---|---|---|---|
| PEEK (KT-880P) (wt %) | 100 | 95 | 90 | 85 | 85 | 85 | 85 |
| PEI (Ultem® 1000) (wt %) | | 5 | 10 | 15 | | | |
| PSU (Udel® P-3703P NT) (wt %) | | | | | 15 | 13 | 10 |
| PPSU (Radel® 5600 NT) (wt %) | | | | | | 2 | 5 |
| Cal Stearate (pph) | 0.01 | 0.01 | 0.01 | 0.01 | 0.01 | 0.01 | 0.01 |
| | | | | | | | |
| Epoxy adhesion (peel strength) (N/12.7mm) | 0.47 | 0.49 | 1.10 | 1.50 | 1.70 | 1.55 | 1.41 |
| Crystallization temp, DSC Tc (°C) | 298 | 297 | 295 | 293 | 296 | 296 | 296 |
| Melt Viscosity, 400°C, 1,000 1/s | 145 | 199 | 161 | 163 | 143 | 142 | 141 |
| Tensile Modulus, ksi, ASTM D638 | 537 | 539 | 517 | 519 | 521 | 513 | 510 |
| Tensile Strain @ Brk, %, ASTM D638 | 20 | 21 | 28 | 44 | 25 | 32 | 29 |
| Tensile Strain @ Yld, %, ASTM D638 | 5.2 | 5.6 | 5.8 | 5.9 | 5.4 | 5.6 | 5.6 |
| Tensile Strength @ Brk, psi, ASTM D638 | -- | 10,100 | 10,500 | 10,800 | 9,800 | 9,700 | 9,550 |
| Tensile Strength @ Yld, psi, ASTM D638 | 14800 | 14,700 | 14,600 | 14,500 | 14,100 | 13,900 | 14,000 |
| Flex Strength, ASTM D790, psi | 22,200 | 21600 | 21700 | 20,900 | 20,900 | 21,300 | 20,800 |
| Flex Modulus, ASTM D790, ksi | 551,000 | 538,000 | 538,000 | 512,000 | 518,000 | 535,000 | 512,000 |
| Notched Izod, ASTM D256 | 0.99 | 0.91 | 1.05 | 1.03 | 0.88 | 1.02 | 1.08 |

As shown by Comparative Example C1, PEEK alone exhibited an excellent crystallization temperature of 298°C, but epoxy adhesion was relatively poor at only 0.47 N/12.7mm. The addition of 5 wt. % polyetherimide (PEI) resulted in a negligible increase in epoxy adhesion and a reduction in crystallization temperature to 297 °C (Comparative Example C2). The additions of 10 and 15 wt. % of PEI (Comparative Examples C3 and C4, respectively) produced increased epoxy adhesion, but with an attendant significant reduction in crystallization temperature.

In contrast, the inventive composition of Example 5, which included 15 wt. % PSU, unexpectedly achieved a 362 % increase in epoxy adhesion over PEEK alone with only a two-degree reduction in crystallization temperature. Similarly, when a portion of the PSU was replaced in Examples 6 and 7 with more chemically-resistant PPSU, epoxy adhesion was surprisingly increased at least 300 % over PEEK alone, and again crystallization temperature was reduced by only 2°C.

## Claims

1. A layered structure comprising a polymeric layer and a varnish layer contacting the polymeric layer,
wherein :
- the polymeric layer includes a poly(ether ether ketone) (PEEK) and a poly(aryl ether sulfone)(PAES), and
- the varnish layer comprises a copolymer comprising more than 50 mol % of the recurring units (R_{EPOX}) of formula :
-[-O-Y-O-Z-]- (C)
wherein :
Y is a C₂-C₆ alkyl group, preferably an ethyl group; and
Z is a group of formula : 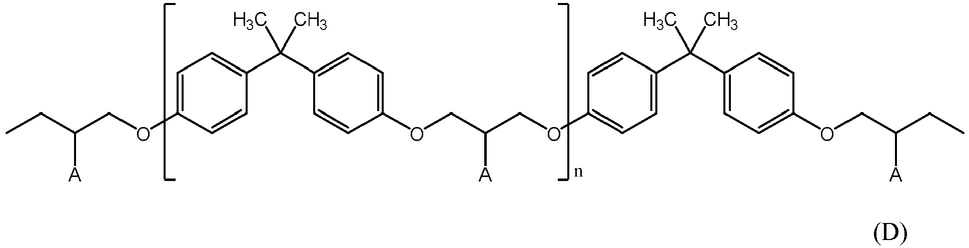 wherein :
n is an integer ranging from 0 to 25, and
each A is independently selected from the group consisting of -OH and an oxygen bonded to a terminal carbon of an additional Z group.

2. The layered structure of claim 1, wherein the poly(ether ether ketone) (PEEK) comprises more than 50 mol % of recurring units (R_{PEEK}) of formula : 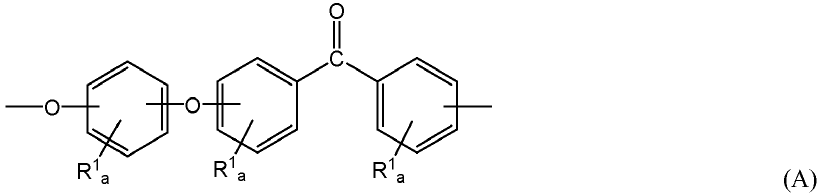 wherein :
each R¹, equal or different from each other, is independently selected from the group consisting of halogen, alkyl, alkenyl, alkynyl, aryl, ether, thioether,
carboxylic acid, ester, amide, imide, alkali or alkaline earth metal sulfonate, alkyl sulfonate, alkali or alkaline earth metal phosphonate, alkyl phosphonate, amine and quaternary ammonium; and
each a, equal to or different from each other, is independently selected from 0, 1, 2, 3, and 4.

3. The layered structure of any one of claims 1 and 2, wherein the poly(aryl ether sulfone)(PAES) comprises at least 50 mol % of recurring units (R_{PAES}) of formula : 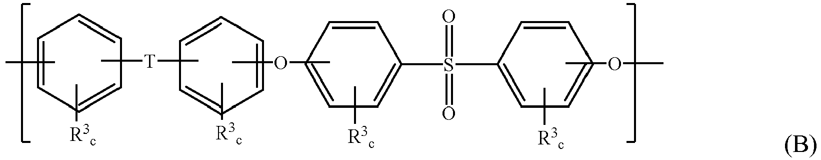 wherein :
each R³, equal to or different from each other, is independently selected from the group consisting of halogen, alkyl, alkenyl, alkynyl, aryl, ether, thioether,
carboxylic acid, ester, amide, imide, alkali or alkaline earth metal sulfonate, alkyl sulfonate, alkali or alkaline earth metal phosphonate, alkyl phosphonate, amine and quaternary ammonium;
each c, equal to or different from each other, is independently selected from 0, 1, 2, 3, and 4; and
T is selected from the group consisting of a bond, a sulfone group [-S(=O)₂₋], and a group -C(R⁴)(R⁵)-, where R⁴ and R⁵, equal to or different from each other, is independently selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium.

4. The layered structure of any one of claims 1 to 3, wherein the poly(aryl ether sulfone)(PAES) is polysulfone (PSU).

5. The layered structure of claim 4, wherein the poly(aryl ether sulfone)(PAES) polymer further comprises a polyphenylsulfone (PPSU).

6. The layered structure of any one of claims 1 to 5, wherein the poly(aryl ether sulfone)(PAES) is present in a total amount ranging from 1 to 25 wt.%, based on the total amount of the poly(ether ether ketone) (PEEK) and the poly(aryl ether sulfone)(PAES).

7. The layered structure of any one of claims 1 to 6, wherein the varnish layer is made from an epoxy-based-resin composition comprising an epoxy resin of formula : 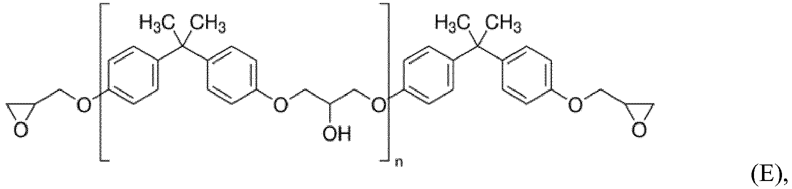 wherein n is an integer ranging from 0 to 25.

8. The layered structure of any one of claims 1 to 7, further comprising a metal substrate adjacent to, and optionally contacting, the polymeric layer.

9. The layered structure of claim 8, wherein the metal substrate contacts the polymeric layer.

10. The layered structure of any one of claims 8 and 9, wherein the metal substrate comprises copper, aluminum, or a combination thereof.

11. The layered structure of any one of claims 8 to 10, wherein the metal substrate is an electrical conductor of a wire and the polymeric layer is an electrical insulation layer of the wire.

12. The layered structure of claim 11, wherein the wire has a non-circular transverse cross-section, preferably a rectangular or rounded rectangular transverse cross-section.

13. The layered structure of any one of claims 11 and 12, wherein the wire is coiled magnet wire, and the varnish layer impregnates the coiled magnet wire.

14. The layered structure of any one of claims 1 to 13, wherein the polymeric layer has a crystallization temperature measured by DSC ranging from 296°C to 298°C.

15. A method of making the layered structure of any one of claims 1 to 14, comprising applying an epoxy-based-resin composition to the polymeric layer, and curing the epoxy-based-resin composition to form the varnish layer at a temperature less than 200°C, preferably less than 150°C.

## Patentansprüche

1. Schichtstruktur, umfassend eine Polymerschicht und eine Lackschicht in Kontakt mit der Polymerschicht, wobei:
- die Polymerschicht ein Poly(etheretherketon) (PEEK) und ein Poly(arylethersulfon) (PAES) enthält und
- die Lackschicht ein Copolymer umfasst, das mehr als 50 mol-% an den Wiederholungseinheiten (R_{EPOX}) der Formel:
-[-O-Y-O-Z-]- (C)
umfasst,
wobei:
Y eine C₂-C₆-Alkylgruppe, vorzugsweise eine Ethylgruppe, ist; und
Z eine Gruppe der Formel: 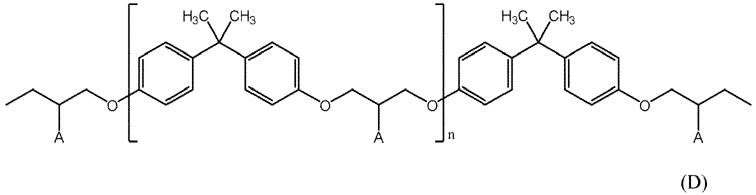 ist,
wobei:
n eine ganze Zahl in dem Bereich von 0 bis 25 ist und
jedes A unabhängig ausgewählt ist aus der Gruppe bestehend aus -OH und einem Sauerstoff, der an einen endständigen Kohlenstoff einer zusätzlichen Z-Gruppe gebunden ist.

2. Schichtstruktur gemäß Anspruch 1, wobei das Poly(etheretherketon) (PEEK) mehr als 50 mol-% an Wiederholungseinheiten (R_{PEEK}) der Formel: 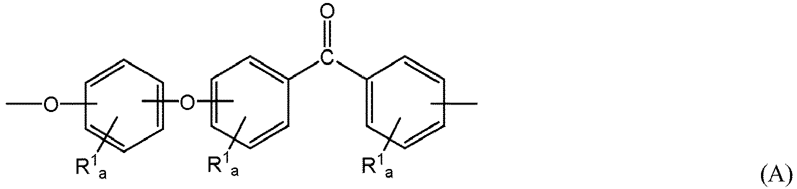 umfasst,
wobei:
jedes R¹, gleich oder voneinander verschieden, unabhängig ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium; und
jedes a, gleich oder voneinander verschieden, unabhängig ausgewählt ist aus 0, 1, 2, 3 und 4.

3. Schichtstruktur gemäß einem der Ansprüche 1 und 2, wobei das Poly(arylethersulfon) (PAES) wenigstens 50 mol-% an Wiederholungseinheiten (R_{PAES}) der Formel: 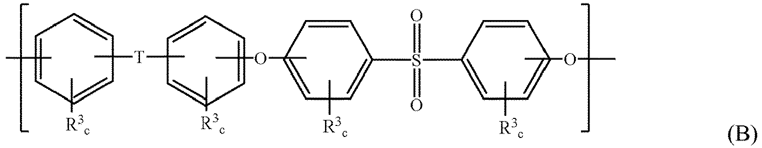 umfasst,
wobei:
jedes R³, gleich oder voneinander verschieden, unabhängig ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium; und
jedes c, gleich oder voneinander verschieden, unabhängig ausgewählt ist aus 0, 1, 2, 3 und 4; und
T ausgewählt ist aus der Gruppe bestehend aus einer Bindung, einer Sulfongruppe [-S(=O)₂-] und einer Gruppe -C(R⁴)(R⁵)-, wobei R⁴ und R⁵, gleich oder voneinander verschieden, unabhängig ausgewählt sind aus einem Wasserstoff, einem Halogen, einem Alkyl, einem Alkenyl, einem Alkinyl, einem Ether, einem Thioether, einer Carbonsäure, einem Ester, einem Amid, einem Imid, einem Alkali- oder Erdalkalimetallsulfonat, einem Alkylsulfonat, einem Alkali- oder Erdalkalimetallphosphonat, einem Alkylphosphonat, einem Amin und einem quaternären Ammonium.

4. Schichtstruktur gemäß einem der Ansprüche 1 bis 3, wobei das Poly(arylethersulfon) (PAES) Polysulfon (PSU) ist.

5. Schichtstruktur gemäß Anspruch 4, wobei das Poly(arylethersulfon)(PAES)-Polymer ferner ein Polyphenylsulfon (PPSU) umfasst.

6. Schichtstruktur gemäß einem der Ansprüche 1 bis 5, wobei das Poly(arylethersulfon) (PAES) in einer Gesamtmenge in dem Bereich von 1 bis 25 Gew.-%, bezogen auf die Gesamtmenge des Poly(etheretherketons) (PEEK) und Poly(arylethersulfons) (PAES), vorhanden ist.

7. Schichtstruktur gemäß einem der Ansprüche 1 bis 6, wobei die Lackschicht aus einer Harzzusammensetzung auf Epoxybasis gebildet ist, die ein Epoxyharz der Formel: 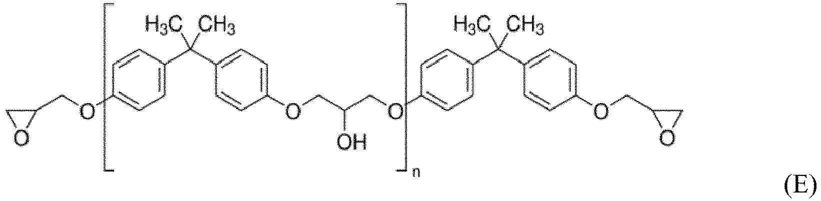 umfasst, wobei n eine ganze Zahl in dem Bereich von 0 bis 25 ist.

8. Schichtstruktur gemäß einem der Ansprüche 1 bis 7, ferner umfassend ein Metallsubstrat benachbart zu und gegebenenfalls in Kontakt mit der Polymerschicht.

9. Schichtstruktur gemäß Anspruch 8, wobei das Metallsubstrat mit der Polymerschicht in Kontakt ist.

10. Schichtstruktur gemäß einem der Ansprüche 8 und 9, wobei das Metallsubstrat Kupfer, Aluminium oder eine Kombination davon umfasst.

11. Schichtstruktur gemäß einem der Ansprüche 8 bis 10, wobei das Metallsubstrat ein elektrischer Leiter eines Drahts ist und die Polymerschicht eine elektrische Isolationsschicht des Drahts ist.

12. Schichtstruktur gemäß Anspruch 11, wobei der Draht einen nicht-kreisförmigen Querschnitt aufweist, vorzugsweise einen rechteckigen oder abgerundet rechteckigen Querschnitt.

13. Schichtstruktur gemäß einem der Ansprüche 11 und 12, wobei der Draht ein Magnetwicklungsdraht ist und die Lackschicht den Magnetwicklungsdraht imprägniert.

14. Schichtstruktur gemäß einem der Ansprüche 1 bis 13, wobei die Polymerschicht eine Kristallisationstemperatur, gemessen durch DSC, in dem Bereich von 296 °C bis 298 °C aufweist.

15. Verfahren zur Herstellung der Schichtstruktur gemäß einem der Ansprüche 1 bis 14, umfassend Aufbringen einer Harzzusammensetzung auf Epoxybasis auf die Polymerschicht und Härten der Harzzusammensetzung auf Epoxybasis, um die Lackschicht zu bilden, bei einer Temperatur von weniger als 200 °C, vorzugsweise weniger als 150 °C.

## Revendications

1. Structure stratifiée comprenant une couche polymérique et une couche de vernis en contact avec la couche polymérique,
- la couche polymérique comportant une poly(éther éther cétone) (PEEC) et une poly(aryl éther sulfone) (PAES), et
- la couche de vernis comprenant un copolymère comprenant plus de 50 % en moles des motifs répétitifs (R_{EPOX}) de formule :
-[-O-Y-O-Z-]- (C)
Y étant un groupe C₂-C₆ alkyle, préférablement un groupe éthyle ; et
Z étant un groupe de formule : 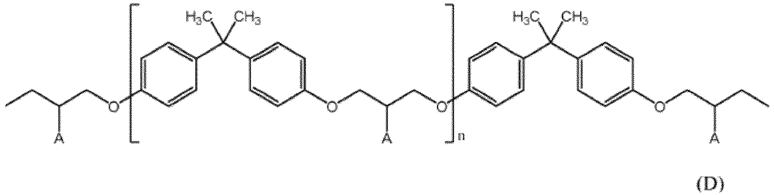 n étant un entier dans la plage de 0 à 25, et chaque A étant indépendamment choisi dans le groupe constitué par -OH et un oxygène lié à un carbone terminal d'un groupe Z supplémentaire.

2. Structure stratifiée selon la revendication 1, la poly(éther éther cétone) (PEEC) comprenant plus de 50 % en moles de motifs répétitifs (R_{PEEC}) de formule : 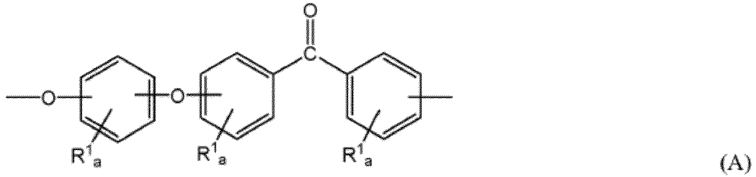
chaque R¹, identique ou différent l'un de l'autre, étant indépendamment choisi dans le groupe constitué par halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ; et
chaque a, identique ou différent l'un de l'autre, étant indépendamment choisi parmi 0, 1, 2, 3, et 4.

3. Structure stratifiée selon l'une quelconque des revendications 1 et 2, la poly(aryl éther sulfone) (PAES) comprenant au moins 50 % en moles de motifs répétitifs (R_{PAES}) de formule : 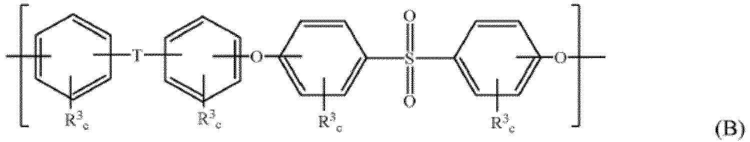
chaque R³, identique ou différent l'un de l'autre, étant indépendamment choisi dans le groupe constitué par halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;
chaque c, identique ou différent l'un de l'autre, étant indépendamment choisi parmi 0, 1, 2, 3, et 4 ; et
T étant choisi dans le groupe constitué par une liaison, un groupe sulfone [-S(=O)₂₋], et un groupe - C(R⁴)(R⁵)-, où R⁴ et R⁵, identiques ou différents l'un de l'autre, sont indépendamment choisis parmi un hydrogène, un halogène, un alkyle, un alcényle, un alcynyle, un éther, un thioéther, un acide carboxylique, un ester, un amide, un imide, un sulfonate de métal alcalin ou alcalino-terreux, un sulfonate d'alkyle, un phosphonate de métal alcalin ou alcalino-terreux, un phosphonate d'alkyle, une amine, et un ammonium quaternaire.

4. Structure stratifiée selon l'une quelconque des revendications 1 à 3, la poly(aryl éther sulfone) (PAES) étant une polysulfone (PSU).

5. Structure stratifiée selon la revendication 4, le polymère de type poly(aryl éther sulfone) (PAES) comprenant en outre une polyphénylsulfone (PPSU).

6. Structure stratifiée selon l'une quelconque des revendications 1 à 5, la poly(aryl éther sulfone) (PAES) étant présente en une quantité totale dans la plage de 1 à 25 % en poids, sur la base de la quantité totale de la poly(éther éther cétone) (PEEC) et de la poly(aryl éther sulfone) (PAES).

7. Structure stratifiée selon l'une quelconque des revendications 1 à 6, la couche de vernis étant composée d'une composition de résine à base d'époxy comprenant une résine époxy de formule : 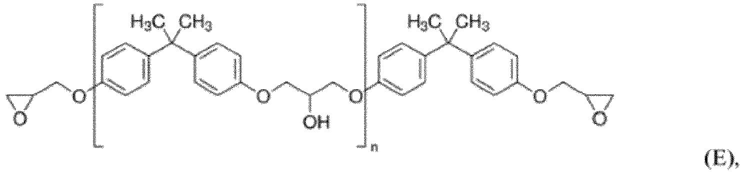 n étant un entier dans la plage de 0 à 25.

8. Structure stratifiée selon l'une quelconque des revendications 1 à 7, comprenant en outre un substrat métallique adjacent à, et éventuellement en contact avec, la couche polymérique.

9. Structure stratifiée selon la revendication 8, le substrat métallique étant en contact avec la couche polymérique.

10. Structure stratifiée selon l'une quelconque des revendications 8 et 9, le substrat métallique comprenant du cuivre, de l'aluminium, ou une combinaison correspondante.

11. Structure stratifiée selon l'une quelconque des revendications 8 à 10, le substrat métallique étant un conducteur électrique d'un fil et la couche polymérique étant une couche d'isolation électrique du fil.

12. Structure stratifiée selon la revendication 11, le fil possédant une section transversale non circulaire, préférablement une section transversale rectangulaire ou rectangulaire arrondie.

13. Structure stratifiée selon l'une quelconque des revendications 11 et 12, le fil étant un fil d'aimant bobiné, et la couche de vernis imprégnant le fil d'aimant bobiné.

14. Structure stratifiée selon l'une quelconque des revendications 1 à 13, la couche polymérique possédant une température de cristallisation mesurée par DSC dans la plage de 296 °C à 298 °C.

15. Procédé de préparation de la structure stratifiée selon l'une quelconque des revendications 1 à 14, comprenant l'application d'une composition de résine à base d'époxy à la couche polymérique, et le durcissement de la composition de résine à base d'époxy pour former la couche de vernis à une température inférieure à 200 °C, préférablement inférieure à 150 °C.
